## Europäisches Patentamt
## European Patent Office
## Office européen des brevets

(19)

(11) Veröffentlichungsnummer: **0 148 450**
**B1**

(12) # EUROPÄISCHE PATENTSCHRIFT

(45) Veröffentlichungstag der Patentschrift:
08.03.89

(51) Int. Cl.⁴: **F 16 H 21/18**

(21) Anmeldenummer: **84115467.7**

(22) Anmeldetag: **14.12.84**

(54) Schwinghebelantrieb für elektrische Kleingeräte.

(30) Priorität: **23.12.83 DE 3346657**

(43) Veröffentlichungstag der Anmeldung:
**17.07.85 Patentblatt 85/29**

(45) Bekanntmachung des Hinweises auf die Patenterteilung:
**08.03.89 Patentblatt 89/10**

(84) Benannte Vertragsstaaten:
**AT BE CH DE FR GB IT LI LU NL SE**

(56) Entgegenhaltungen:
EP-A-0 023 690
DE-A-2 409 592
DE-A-3 224 223
DE-C-878 881
FR-A-411 879
FR-A-2 319 467
GB-A-919 363
US-A-3 561 115

(73) Patentinhaber: **Braun Aktiengesellschaft,
Rüsselsheimer Strasse 22, D-6000 Frankfurt/Main
(DE)**

(72) Erfinder: **Schweingruber, Otto, Höhenblick 1,
D-6246 Glashütten (DE)**
Erfinder: **Cimbal, Jochen, Frankfurter Strasse 22,
D-6260 Friedberg 1 (DE)**
Erfinder: **Steijger, Wilfridus, Soemmeringstrasse 1,
D-6000 Frankfurt 1 (DE)**
Erfinder: **Odemer, Michael, Erlenbacher Stadtweg
11, D-6000 Frankfurt 56 (DE)**

(74) Vertreter: **Einsele, Rolf, Braun Aktiengesellschaft
Postfach 1120 Frankfurter Strasse 145, D-6242
Kronberg Taunus (DE)**

EP 0 148 450 B1

**Beschreibung**

Die Erfindung bezieht sich auf eine Vorrichtung zur Umwandlung der Drehbewegung eines von einer Motorwelle angetriebenen Exzenters in eine hin- und hergehende Bewegung eines mit einem Achsbolzen gekoppelten Arbeitswerkzeuges von elektrisch angetriebenen Kleingeräten, in deren Gehäuse ein mit dem Achsbolzen versehener, doppelarmiger Hebel schwenkbar gelagert und ein den doppelarmigen Schwinghebel mit dem Exzenter verbindender Pleuelarm vorgesehen ist, wobei der Pleuelarm mit dem Exzenter mittels eines Rotationslagers gekoppelt ist.

Die DE-C-2 409 592 zeigt einen Trockenrasierer mit rotationsmotor, einem oszillierenden Untermesser und mit einem Kurbelschwingengetriebe zur Umsetzung der Drehbewegung des Motors in die oszillierende Bewegung des Untermessers, wohei die Motorwelle parallel zur Längsachse des in das Untermesser eingreifenden Schwinghebels ausgerichtet und um die länge der Kurbelstange seitlich versetzt angeordnet ist. Die Kurbelstange ist einerseits über eine elastische kardanische Aufhängung, bestehend aus einem Rotationslager und elastischen Stegen, mit dem Exzenter auf der Motorwelle und andererseits über ein Kugelgelenk mit dem Schwinghebel verbunden zur Übertragung der Exzenterbewegung auf den Schwinghebel und zugleich zum Ausgleich und zur Anpassung der Bewegungsrichtungen der Kurbelstange sowie des Schwinghebels. Diese Art der Bewegungsübertragung ist aufwendig und fertigungstechnisch aufgrund der einzuhaltenden Toleranzen der Lager und Gelenkteile äußerst problematisch. Die nutzbare Leistung, die durch die Bewegungsübertragungsvorrichtung vernichtet wird, ist sehr hoch. Das Schwingungsverhalten des Schwinghebels, bei dem in einem vorgegebenen Drehzahlbereich des Rotationsmessers eine Amplitudenkonstanz als Optimum angestrebt wird, ist sehr negativ.

Aus der JP-Y-2 57-57650 ist ein Trockenrasierapparat mit Rotationsmotor, einem oszillierenden Untermesser und einem Kurbelschwingengetriebe zur Umsetzung der Drehbewegung des Motors in eine oszillierende Bewegung des Untermessers bekannt. Die Motorwelle ist parallel zur Längsachse des in das Untermesser eingreifenden Schwinghebels ausgerichtet und um die Länge der Kurbelstange seitlich versetzt angeordnet. Die Kurbelstange ist im Bereich des Schwinghebels gabelförmig ausgebildet, wobei der Schwinghebel in diese Gabel eingreift und mittels eines Gelenkbolzens in der Gabel schwenkbar gehalten ist. Die Kurbelstange ist weiterhin über ein im Pleuelkopf vorgesehenes Exzentergetriebe mit der Motorwelle des Rotationsmotors verbunden. In dieser Bewegungsübertragungseinrichtung wird die Schwinghöhe des Schwinghebels über die Kurbelstange nur unter Inkaufnahme von erheblichen Druckbeanspruchungen und hohen Reibungskräften in den beiden Legerstellen, Gelenkbolzen und Exzentergetriebe der Kurbelstange ausgeglichen, wodurch ein hoher Anteil der zu übertragenden Leistung vernichtet wird, die zwangsläufigerweise durch eine erhöhte Energiezufuhr erbracht werden muß. Ein erhöhter Energieverbrauch macht sich für den Benutzer eines solchen Geräts spürbar bemerkbar dadurch, daß er nach kurzem Gebrauch z. B. nach einer geringen Anzahl von Rasuren der Akkumulator wiederaufladen oder die Batterien austauschen muß.

Aufgabe der vorliegenden Erfindung ist es, eine Vorrichtung der eingangs genannten Gattung zu schaffen, bei der die Umwandlung der Drehbewegung in eine hin- und hergehende Bewegung mit geringstmöglichen Verlusten an Antriebsenergie bewerkstelligt wird. Die Vorrichtung soll eine ungehinderte Bewegung in allen geforderten Freiheitsgraden reibungsarm gewährleisten und geräuscharm arbeiten.

Nach der Erfindung wird diese Aufgabe dadurch gelöst, daß der doppelarmige Schwinghebel und der Pleuelarm durch eine Gelenkverbindung, die sämtliche Rotationen und eine Translation parallel zur Längsachse vom Pleuelarm gegenüber dem Schwinghebel erlaubt, miteinander gekoppelt sind und daß der Gelenkmittelpunkt auf der Längsachse des zugeordneten Hebelarmes des doppelarmigen Schwinghebels liegt.

Nach der Erfindung fällt der Gelenkmittelpunkt zusammen mit dem Schnittpunkt der Längsachse des zugeordneten Hebelarmes des doppelarmigen Schwinghebels und des Pleuelarms.

Die lösung nach der Erfindung zeichnet sich insbesondere durch einen geringen Leistungsverbrauch und ein verbessertes Amplitudenverhalten über Drehzahlschwankungen aus, was darauf zurückzuführen ist, daß zur Bewegungsumwandlung nur eine einzige Gelenkverbindung vorgesehen ist, deren Gelenkmittelpunkt alle Freiheitsgrade in sich vereinigt. Diese Gelenkverbindung des doppelarmigen Schwinghebels mit dem Pleuelarm erlaubt sämtliche Rotationen und eine Translation parallel zur Längsachse des Schwinghebels vom Pleuelarm gegenüber dem Schwinghebel. Diese Gelenkverbindung mit ihrem auf der Längsachse des zugeordneten Hebelarmes des doppelarmigen Schwinghebels liegenden Gelenkmittelpunkt, in dem alle Bewegungsachsen der eine Schwenkbewegung ausführenden Bauelemente zusammentreffen, ermöglicht durch die hiernach gegebene Krafteinleitung in diesen Gelenkmittelpunkt unter anderem, daß die Stabilität von doppelarmigem Schwinghebel und Pleuelarm verringert werden kann, was eine Verringerung der Gesamtmasse dieser Bauteile zur Folge hat. Auch der Durchmesser des Legers des doppelarmigen Schwinghebels sowie des mit dem Pleuelarm in Eingriff stehenden Legerbolzens können verkleinert werden mit der Folge einer Reibungsverminderung in diesen Legerstellen.

Im Rahmen der vorliegenden Erfindung sind eine Reihe von unterschiedlichen Ausführungsformen möglich, die jede für sich zusätzliche Vorteile aufweisen.

Eine besonders einfache und preiswert herstellbare Ausführungsform nach der Erfindung ist dadurch gekennzeichnet, daß an dem dem Pleuelarm zugeordneten Hebelarm des doppelarmigen Schwinghebels ein sich in dessen Längsachse erstreckender Lagerbolzen vorgesehen ist, daß der starr ausgebildete Pleuelarm an seinem einen Ende eine Lagerbohrung relativ geringer Wandstärke aufweist, die den Lagerbolzen mit einem vorgegebenen Bewegungsspiel umgibt, daß der Lagerbolzen mit einem Anschlag versehen ist, an dem der Pleuelarm anliegt, und daß der Anschlag sowie der Bereich um die Lagerbohrung derart geformt sind, daß ein ungehindertes Abrollen im Berührungsbereich in allen Bewegungsrichtungen von Pleuelarm und doppelarmigen Schwinghebel gewährleistet ist.

In weiterer Ausgestaltung dieser Ausführungsform weist der Anschlag des Lagerbolzens sowie der Pleuelarm im Bereich der Lagerbohrung eine dem Anschlag angepaßte gerundete Form auf.

Die nach den vorangegangenen Merkmalen aufgezeigte Gelenkverbindung gewährleistet ein direktes Zusammentreffen der Bewegungsachsen des Pleuelarmes und des doppelarmigen Schwinghebels in dem auf der Längsachse des Schwinghebels liegenden Gelenkmittelpunkt.

Eine andere Ausführungsform zeichnet sich dadurch aus, daß der Pleuelarm um die Längsachse des zugeordneten Hebelarmes des doppelarmigen Schwinghebels an diesem drehbar gelagert ist und daß der Pleuelarm wenigstens ein Gelenkpaar/Filmscharnierpaar aufweist, dessen Mitten-/Biegeachse die Längsachse des zugeordneten Hebelarmes des doppelarmigen Schwinghebels kreuzt. Bei dieser Ausführungsform ist durch die örtlich definierte Mitten-/Biegeachse des Pleuelarmes, die durch den Delenkmittelpunkt verläuft, sichergestellt, daß die Bewegungsachsen des Pleuelarms mittelbar dem Gelenkmittelpunkt zugeführt werden.

In weiterer Ausgestaltung letztgenannter Ausführungsform ist vorgesehen, daß der Pleuelarm ein gabelförmig ausgebildetes Ende aufweist, daß die Gabelstege des Pleuelarmes über einen Steg miteinander verbunden sind, daß an dem Steg ein sich in die Gabelöffnung erstreckender Arm mit einer Lagerbohrung vorgesehen ist und daß die Gabelstege jeweils mit einem Filmscharnier versehen sind, deren gemeinsame Mitten-/Biegeachse die Mittenachse der Lagerbohrung kreuzt.

Zur Ankopplung des Pleuelarmes an dem Schwinghebel ist an dem dem Pleuelarm zugeordneten Hebelarm des doppelarmigen Schwinghebels ein sich in dessen Längsachse erstreckender Lagerbolzen vorgesehen.

Der Pleuelarm ist bei allen Ausführungsformen einerseits über die Lagerbohrung schwenkbar um den Lagerbolzen des zugeordneten Hebelarmes des doppelarmigen Hebels mit diesem und andererseits über einen am Ende des Gabelstiels des Pleuelarmes befindlichen Pleuelkopf mit dem Exzenter gekoppelt.

Ein weiterer Vorteil nach der Erfindung besteht darin, daß diese Ausgestaltungen ermöglicht, die insbesondere die Anpassung dieser Vorrichtung auf vorgegebene Einbaukriterien in Geräten der angegebenen Gattung betreffen, und zwar ohne zusätzlichen Bauaufwand. Zu diesem Zweck kann sich die Längsachse des dem Pleuelarm zugeordneten Hebelarmes des doppelarmigen Schwinghebels sowohl in Richtung der Längsachse des mit einem Achsbolzen versehenen Hebelarmes erstrecken als auch unter Wahrung der Doppelarmigkeit winklig zu dieser Längsachse verlaufen.

Bei dieser Ausführungsform ist zu gewährleisten, daß die Längsachse des Pleuelarmes die Längsachse des zugeordneten Hebelarmes des doppelarmigen Schwinghebels im rechten Winkel kreuzt. Hinzu kommt, daß die aufgezeigte Bewegungsumwandlung nach der Erfindung nicht beschränkt ist auf ein bestimmtes Hebelverhältnis der beiden Hebel arme des doppelarmigen Hebels. Dieses kann dem jeweiligen Anwendungsfall entsprechend variiert werden.

Weitere Merkmale, Vorteile und Einzelheiten der Erfindung ergeben sich aus der nachfolgenden Beschreibung und der Zeichnung, in denen bevorzugte Ausführungsbeispiele von Vorrichtungen zur Bewegungsumwandlung beispielsweise für den Einbau in einen Trockenrasierapparat dargestellt sind, und zwar zeigen:

Fig. 1    eine schematische Darstellung eines doppelarmigen Schwinghebels und Pleuelarmes sowie deren Bewegungsachsen,

Fig. 2    eine perspektivische Darstellung eines doppelarmigen Schwinghebels mit angekoppeltem starren Pleuelarm,

Fig. 3    eine Gelenkverbindung nach Fig. 2 mit einem Längsschnitt durch den Pleuelarm,

Fig. 4    eine perspektivische Darstellung eines doppelarmigen Schwinghebels und eines gabelförmigen Pleuelarmes mit Filmscharnieren,

Fig. 5    einen doppelarmigen Schwinghebel und einen gabelförmigen Pleuelarm mit Befestigungsmitteln im Schnitt und

Fig. 6    eine schematische Darstellung von baulichen Varianten des doppelarmigen Schwinghebels.

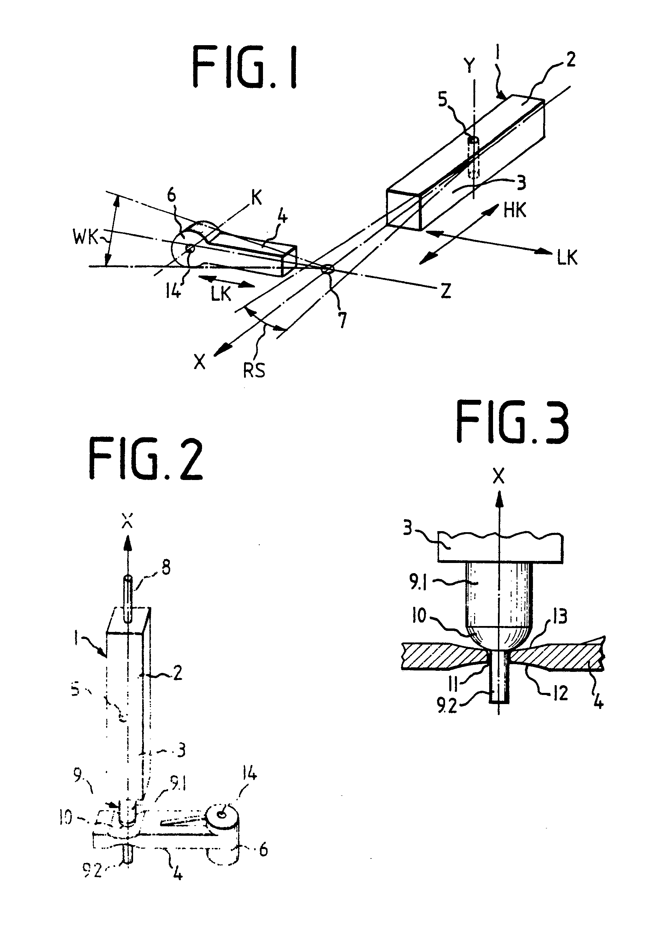

In Figur 1 ist der doppelarmige Schwinghebel mit 1, der mit einem Achsbolzen für das anzutreibende Arbeitswerkzeug z. B. den Messerblock eines Trockenrasierers zu versehene Hebelarm mit 2 und der dem Pleuelarm 4 zugeordnete Hebelarm mit 3 bezeichnet.

Der doppelarmige Schwinghebel weist eine Lagerbohrung 5 auf, deren Schwenkachse mit y bezeichnet ist. In die Lagerbohrung greift ein nicht dargestellter an einem Gehäuse des Kleingerätes befindlicher Achsbolzen ein. Der Drehpunkt, der durch die Hebelarme 2 und 3 verlaufenden Längsachse x, liegt auf der Schwenkachse y.

Im unteren Totpunkt der radialen Schwenkbewegung RS des doppelarmigen Schwinghebels 1 um die Schwenkachse y kreuzt die Längsachse z des Pleuelarmes 4 im rechten Winkel die Längsachse x. Im Kreuzungspunkt der beiden Längsachsen x und z befindet sich der Gelenkmittelpunkt 7.

Der Pleuelarm 4 ist mit einem Pleuelkopf 6 versehen, in dessen Bohrung 14 mit der Mittenachse K ein nicht dargestellter Exzenterbolzen zum Zwecke des Antriebes eingreift. Die kreisförmige Bewegung der Mittenachse K des Pleuelkopfes 6 wird über den Pleuelkopf 6 und den im Gelenkmittelpunkt 7 gelagerten Pleuelarm 4 umgesetzt in eine Winkelkomponente WK und in eine lineare Komponente LK. Die lineare Komponente LK hat eine radiale Schwenkbewegung RS des doppelarmigen Schwinghebels I mit seiner Längsachse X zur Folge, mit einer linearen Komponente LK und einer linearen Höhenkomponente HK.

Die vorgenannten Bewegungskomponenten, im folgenden pauschal als Bewegungsachsen bezeichnet, werden nach der Erfindung in einem auf der Längsachse X des doppelarmigen Schwinghebels liegenden Gelenkmittel punkt 7 gezielt zusammengeführt und mittels einer einzigen Gelenkverbindung, die alle Freiheitsgrade in sich vereinigt, gelenkt.

Figur 2 zeigt eine sämtliche Freiheitsgrade in sich Vereinigende Gelenkverbindung zwischen dem doppelarmigen Schwinghebel 1 und dem Pleuelarm 4 in deren Gelenkmittelpunkt sämtliche Bewegungsachsen unmittelbar Zusammengeführt sind.

An dem doppelarmigen Schwinghebel 1, bestehend aus den Hebelarmen 2 und 3 und der Lagerbohrung 5, ist an dem Hebelarm 2 ein Achsbolzen 8 zur Ankoppelung eines Arbeitswerkzeuges und an dem Hebelarm 3 ein abgesetzter Lagerbolzen 9 vorgesehen Die Längsachse x des doppelarmigen Schwinghebels 1 verläuft sowohl durch den Achsbolzen 8 als auch durch den Lagerbolzen 9. Durch den vorgesehenen Absatz am Lagerbolzen wird dieser in einen Bolzenteil 9.1 größeren Durchmessers und einen Bolzenteil 9.2 geringeren Durchmessers unterteilt, wobei der Übergang beider Bolzenteile als Anschlag 10 bezeichnet ist. An dem Anschlag 10, der eine gerundete Form aufweist, liegt der starr ausgebildete Pleuelarm 4 an. Der Lagerbolzen 9.2 ist dabei durch eine im Pleuelarm 4 vorgesehene Lagerbohrung 11 (Fig. 3) hindurchgeführt. Die Bolzenteile 9.1 und 9.2 des Lagerbolzens 9 können unmittelbar am Hebelarm 3 angeformt sein. Das Bolzenteil 9.2 kann aber auch aus einen im Bolzenteil 9.1 eingesetzten Metallstift bestehen

An dem Pleuelarm 4 ist an dem der Lagerbohrung 11 abgewandten Ende ein Pleuelkopf 6 mit der Bohrung 14 zur Aufnahme eines Exzenterbolzens vorgesehen

In Fig. 3 sind Einzelheiten der Gelenkverbindung nach Fig. 2 mit einem Teilschnitt durch den Pleuelarm 4 dargestellt Im Bereich der Gelenkverbindung ist die Wandstärke des Pleuelarmes 4 stark verringert Dies wird beispielsweise durch zwei sich gegenüberliegende muldenartige Vertiefungen 12, 13 erreicht, durch deren tiefsten Punkte die Längsachse X des doppelarmigen Schwinghebels geht. Die Mittenachse der Lagerbohrung 11 liegt auf der Längsachse x. Der kugelförmig gerundete Anschlag 10 rollt bei der Schwenkbewegung des Hebelarmes 3 mit seiner Längsachse x und der Schwenkbewegung des Pleuelarmes 4 über einen Teilbereich um die Schwenkachse X innerhalb der muldenartigen Vertiefung 13 an deren Wand ab. Die muldenartigen Vertiefung 13 ist dabei so gestaltet, daß sie ein ungehindertes Abrollen bzw. eine ungehinderte Bewegung dieser Gelenkteile ermöglicht. Dies gilt auch für das Bewegungsspiel zwischen der Wand der Lagerbohrung II und dem Bolzenteil 9.2, das so groß sein muß, daß die Schwenkbewegung des Lagerbolzens 9.2 mit der Längsachse x bei der jeweils vorgegebenenWandstärke des Pleuelarmes 4 im Bereich der Lagerbohrung 11 innerhalb der Lagerbohrung 11 ungehindert stattfinden kann.

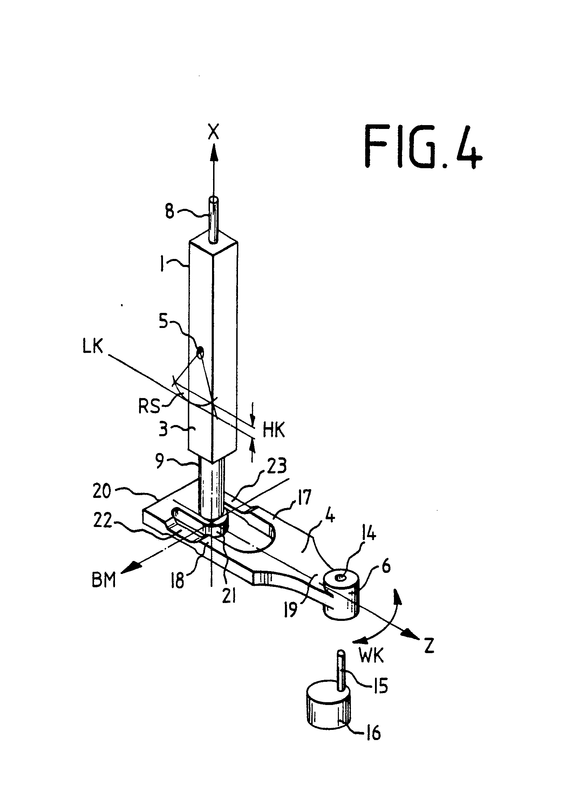

Fig. 4 zeigt einen um die Lagerbohrung 5 schwenkbaren doppelarmigen Schwinghebel 1, dessen Längsachse X mittig durch den Achsbolzen 8, die Lagerbohrung 5 und den Lagerbolzen 9 verläuft.

Der Pleuelarm 4 ist gabelförmig gestaltet. Die Gabelstege 17 und 18 sind einerseits zu einem Gabelstiel 19 zusammengeführt, an dessen Ende der Pleuelkopf 6 angeformt ist, und andererseits über einen Steg 20 miteinander verbunden. An dem Steg 20 ist ein sich in die Gabelöffnung erstreckender Arm 21 angeformt Die Gabelstege 17 und 18 sind jeweils mit einem Filmscharnier 22, 23 versehen, deren gemeinsame Mitten/Biegeachse BM die Längsachse x kreuzt. Die Filmscharniere 22, 23 sind derart gestaltet, daß die flexiblen Stege während der radialen Schwenkbewegung RS des Hebelarmes 3 zum Ausgleich der Höhenkomponente HK des Hebelarmes 3 eine S-förmige Biegegestalt gewährleisten

Der Pleuelarm 4 ist einerseits über die Bohrung 14 im Pleuelkopf 6 mit dem Exzenterbolzen 15 des Exzenters 16 verbunden und andererseits über eine im Arm vorgesehene Lagerbohrung um die Winkelkomponente WK schwenkbar am Lagerbolzen 9 angelenkt.

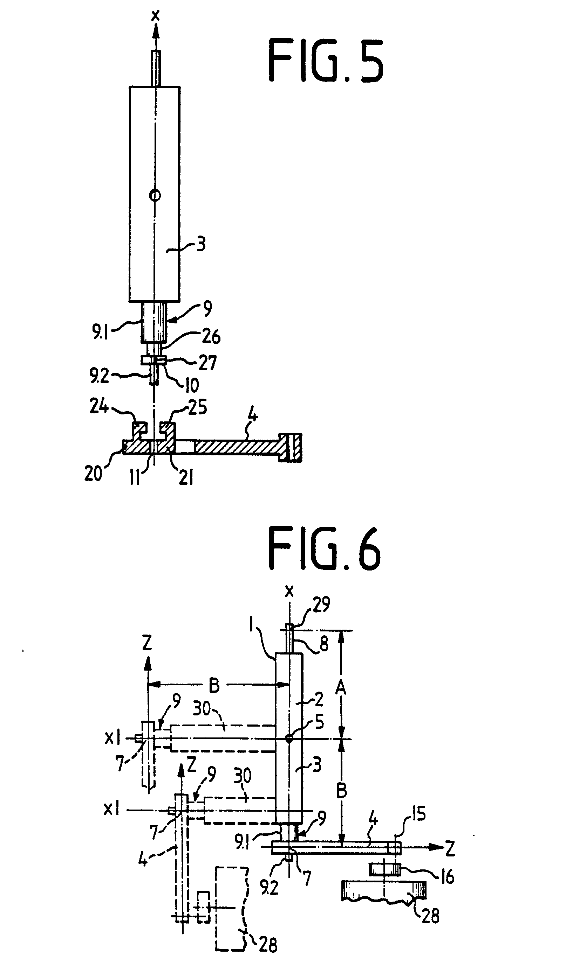

Weitere Einzelheiten der Gelenkverbindung von Pleuelarm 4 und Hebelarm 3 sind in Fig. 5 dargestellt. Der am Hebelarm 3 vorgesehene Lagerbolzen 9 besteht aus den beiden Bolzenteilen 9.1 und 9.2. Der im Übergangsbereich der beiden Bolzenteile durch ihre unterschiedlichen Durchmesser gebildete Anschlag 10 ist ebenso plan ausgebildet, wie der die Lagerbohrung 11 umgebende Bereich des am Steg 20 des Pleuelarmes 4 angeformten Armes 21. In zusammengesteckten Zustand umgibt die Lagerbohrung 11 das Bolzenteil 9.2 mit geringem Bewegungsspiel, wobei der Arm 21 an dem Anschlag 10 anliegt Der Gelenkmittelpunkt dieser Gelenkverbindung liegt auf der durch die Lagerbohrung 11 verlaufenden Längsachse x innerhalb der Lagerbohrung 11. In diesem Gelenkmittelpunkt treffen alle Bewegungsachsen des doppelarmigen Schwinghebels 1 und des Pleuelarmes 4 unmittelbar und mittelbar zusammen.

Die Befestigungsmittel in Form von zwei an dem Arm 21 angeformten Haken 24 und 25 die in eine umlaufende Nut 26, vorgesehen an dem Bolzenteil 9.1, eingreifen, dienen zur Montageerleichterung des doppelarmigen Schwinghebels 1 und des Pleuelarmes 4. Zur Einführung der Haken 24 und 25 in die Nut 26 weist das Bolzenteil 9.1 zwei parallel zur Längsachse x verlaufende Nuten 27 auf, von denen eine in Fig. 5 sichtbar ist. Die Haken 24 und 25 sind so angeführt, daß sie bei Anlage des Armes 21 an den Anschlag 10 an keiner Stelle den Bolzenteil 9.1 berühren.

Die Gelenkverbindung zwischen Pleuelarm 4 und doppelarmigen Schwinghebel 1 nach der Erfindung ermöglicht eine Vielzahl von baulichen Varianten des doppelarmigen Schwinghebels 1. Einige davon sind in Figur 6 schematisch dargestellt, wobei die in den Vorgegangenen Figuren beschriebene Grundversion mit durchgezogenen Linien und zwei Varianten beispielsweise die durch gestrichelte Linien dargestellt sind.

Die Grundversion besteht aus dem doppelarmigen Schwinghebel 1 mit den beiden Hebel armen 2 und 3, dem Achsbolzen 8, dem Lagerbolzen 9 und den Bolzenteilen 9.1 und 9.2, dem Pleuelarm 4, dem Exzenterbolzen 15, dem Exzenter 16 und dem Rotationsmotor 28. Die Länge A des Hebelarmes 2 reicht von der Mitte der Lagerbohrung 5 bis zum Ankoppelungspunkt 29 eines mit den Achsbolzen in Eingriff stehenden, nicht dargestellten Arbeitswerkzeuges und die Länge B des Hebelarmes 3 geht von der Mitte der Lagerbohrung 5 bis zum Gelenkmittelpunkt 7. Ankoppelungspunkt 29, Mittelpunkt der Lagerbohrung 5 und Gelenkmittelpunkt liegen auf der Längsachse X des doppelarmigen Schwinghebels. Das Hebelverhältnis A:B der Hebelarme 2 und 3 kann A = B aber auch unterschiedlich d.h. A > B oder A < B entsprechend den jeweiligen Anwendungsfall gestaltet werden.

Ferner ist es möglich, den dem Pleuelarm 4 zugeordneten Hebelarm 3 abzuwinkeln. In diesen Fällen ist lediglich zu gewährleisten, daß die Längsachse des abgewinkelten Hebelarmes 3, in Fig. 6 mit $x_1$ bezeichnet, die Längsachse x entweder im Mittelpunkt der Lagerbohrung 5 oder im Hebelarm 3 schneidet und daß die Längsachse z des Pleuelarmes 4 die Längsachse $x_1$ des abgewinkelten Hebelarmes 30 im rechten Winkel kreuzt.

**Begriffsliste**

| | |
|---|---|
| 1 | doppelarmiger Schwinghebel |
| 2 | Hebelarm |
| 3 | Hebelarm |
| 4 | Pleuelarm |
| 5 | Lagerbohrung |
| 6 | Pleuelkopf |
| 7 | Gelenkmittelpunkt |
| 8 | Achsbolzen |
| 9 | Lagerbolzen |
| 9.1 | Bolzenteil |
| 9.2 | Bolzenteil |
| 10 | Anschlag |
| 11 | Lagerbohrung |
| 12 | |
| | muldenartige Vertiefung |
| 13 | muldenartige Vertiefung |
| 14 | Bohrung |
| 15 | Exzenterbolzen |
| 16 | Exzenter |
| 17 | Gabelstege |
| 18 | Gabelstege |
| 19 | Gabelstiel |
| 20 | Steg |
| 21 | Arm |
| 22 | Filmscharnier |
| 23 | Filmscharnier |
| 24 | Haken |
| 25 | Haken |
| 26 | Nut |
| 27 | Nuten |
| 28 | Rotationsmotor |
| 29 | Ankoppelungspunkt |
| 30 | abgewinkelter Hebelarm |
| K | Mittenachse der Bohrung |
| RS | radiale Schwenkbewegung |
| WK | Winkelkomponente |
| LK | lineare Komponente |
| HK | Höhenkomponente |
| Y | Schwenkachse |
| x | Längsachse des Hebelarmes 2 und/oder 3 |
| $x_1$ | Längsachse des abgewinkelten Hebelarmes 30 |
| Z | Längsachse des Pleuelarmes 4 |
| BM | Mitten-Biegeachse |

**Patentansprüche**

1. Vorrichtung zur Umwandlung der Drehbewegung eines von einer Motorwelle angetriebenen Exzenters (16) in eine hin- und hergehende Bewegung eines mit einem Achsbolzen (8) gekoppelten Arbeitswerkzeugs von elektrisch angetriebenen Kleingeräten, in deren Gehäuse ein mit dem Achsbolzen (8) versehener, doppelarmiger Schwinghebel (1) schwenkbar gelagert und ein den doppelarmigen Schwinghebel mit dem Exzenter verbindender Pleuelarm (4) vorgesehen ist, wobei der Pleuelarm (4) mit dem Exzenter (16) mittels eines Rotationslagers (14, 16) gekoppelt ist, dadurch gekennzeichnet, daß der doppelarmige Schwinghebel (1) und der Pleuelarm (4) durch eine Gelenkverbindung, die sämtliche Rotationen und eine Translation parallel zur Längsachse (x) vom Pleuelarm (4) gegenüber dem Schwinghebel (1) erlaubt, miteinander gekoppelt sind und daß der Gelenkmittelpunkt (7) auf der Längsachse (x) des zugeordneten Hebelarmes (3, 30) des doppelarmigen Schwinghebels (1) liegt.

2. Vorrichtung nach Anspruch 1, dadurch gekennzeichnet, daß der Gelenkmittel punkt (7) zusammenfällt mit dem Schnittpunkt der Längsachsen (x, x1, z) des zugeordneten Hebelarmes (3, 30) des doppelarmigen Schwinghebels (1) und des Pleuelarmes (4))

3. Vorrichtung nach Anspruch 1, dadurch gekennzeichnet, daß an dem dem Pleuelarm (4) zugeordneten Hebelarm (3, 30) des doppelarmigen Schwinghebels (1) ein sich in desen Längsachse (x) erstreckender Lagerbolzen (9) vorgesehen ist, daß der starr ausgebildete Pleuelarm (4) an seinem einen Ende eine Lagerbohrung (11) relativ geringer Wandstärke aufweist, die den Lagerbolzen (9, 92) mit einem vorgegebenen Bewegungsspiel umgibt, daß der Lagerbolzen (9) mit einem Anschlag (10) versehen ist an dem der Pleuelarm (4) anliegt und daß der Anschlag (10) sowie der Bereich um die Lagerbohrung (11) derart geformt sind, daß ein ungehindertes Abrollen im Berührungsbereich in allen Bewegungsrichtungen von Pleuelarm (4) und doppelarmigen Schwinghebel (1) gewährleistet ist.

4. Vorrichtung nach Anspruch 3, dadurch gekennzeichnet, daß der Anschlag (10) des Lagerbolzens (9) eine gerundete Form aufweist.

5. Vorrichtung nach Anspruch 3 und 4, dadurch gekennzeichnet, daß der Pleuelarm (4) im Bereich der Lagerbohrung (11) eine dem Anschlag (10) angepaßte gerundete Form aufweist.

6. Vorrichtung nach Anspruch 1 oder 2, dadurch gekennzeichnet, daß der Pleuelarm (4) um die Längsachse (x) des zugeordneten Hebelarmes (3, 30) des doppelarmigen Schwinghebels (1) an diesem drehbar gelagert ist und daß der Pleuelarm (4) ein Gelenkpaar/Filmscharnierpaar (22, 23) aufweist, deren Mitten-/Biegeachse (BM) die Längsachse (x) des zugeordneten Hebelarmes (3, 30) des doppelarmigen Schwinghebels (1) kreuzt.

7. Vorrichtung nach den Ansprüchen 1, 2 oder 5, dadurch gekennzeichnet, daß der Pleuelarm (4) ein gabelförmig ausgebildetes Ende aufweist, daß die Gabelstege (17, 18) des Pleuelarmes (4) über einen Steg (20) miteinander verbunden sind, daß an dem Steg (20) ein sich in die Gabelöffnung erstreckender Arm (21) mit einer Lagerbohrung (11) vorgesehen ist und daß die Gabelstege (17, 18) jeweils mit einem Filmscharnier versehen sind, deren gemeinsame Mitten-Biege achse (BM) die Mittenachse der Lagerbohrung (11) kreuzt.

8. Vorrichtung nach Anspruch 6, dadurch gekennzeichnet, daß an dem dem Pleuelarm (4) zugeordneten Hebelarm (3, 30) des doppelarmigen Schwinghebels (1) ein sich in dessen Längsachse (x) erstreckender Lagerbolzen (9) vorgesehen ist.

9. Vorrichtung nach einem der Ansprüche 6 bis 8, dadurch gekennzeichnet, daß der Pleuelarm (4) einerseits über die Lagerbohrung (11) schwenkbar um den Lagerbolzen (9) des zugeordneten Hebelarmes (3, 30) des doppelarmigen Schwinghebels (1) mit diesem und andererseits über einen am Ende des Gabelstiels (19) des Pleuelarmes (4) befindlichen Pleuelkopf (6) mit dem Exzenter (16) gekoppelt ist

10. Vorrichtung nach einem der Ansprüche 6 bis 9, dadurch gekennzeichnet, daß an dem dem Pleuelarm (4) zugeordneten Hebelarm (3, 30) des doppelarmigen Schwinghebels (1) ein Lagerbolzen (9) mit einer umlaufenden Nut (26) vorgesehen ist, die über zwei gegenüberliegende, in Richtung zum Bolzenteil (9.1) verlaufende, Nuten (27) zugängig ist.

11. Vorrichtung nach Anspruch 7, dadurch gekennzeichnet, daß an dem Arm (21) hakenförmige Befestigungsmittel (24, 25) angeformt sind.

12. Vorrichtung nach einem oder mehreren der vorhergehenden Ansprüche, dadurch gekennzeichnet, daß die Längsachse (x, x1) des dem Pleuelarm (4) zugeordneten Hebelarmes (3, 30) des doppelarmigen Schwinghebels (1) sich in Richtung der Längsachse (x) des mit einem Achsbolzen (8) versehenen Hebelarmes (2) erstreckt oder winklig zu dieser Längsachse (x) verläuft.

13. Vorrichtung nach einem oder mehreren der vorhergehenden Ansprüche, dadurch gekennzeichnet, daß die Längsachse (z) des Pleuelarmes (4) die Längsachse (x, x1) des zugeordneten Hebelarmes (3, 30) des doppelarmigen Schwinghebels (1) im rechten Winkel kreuzt.

**Claims**

1. A device for converting the rotary motion of an eccentric (16) driven by a motor shaft into a reciprocating motion of a tool, coupled with a pin (8), of electrically powered small appliances having pivotally mounted in their housings a two-armed oscillating lever (1) provided with the pin (8) and a connecting rod (4) connecting the two-armed oscillating lever with the eccentric, with the connecting rod (4) being coupled with the eccentric (16) by means of a pivot bearing (14, 16), characterized in that the two-armed oscillating lever (1) and the connecting rod (4) are coupled with each other through a joint coupling allowing all rotations and a translation, parallel to the longitudinal axis (x), of the connecting rod (4) relative to the oscillating lever (1), and that the pivot center (7) lies in the longitudinal axis (x) of the associated lever arm (3, 30) of the two-armed oscillating lever (1).

2. A device as claimed in claim 1, characterized in that the pivot center (7) coincides with the point of intersection of the longitudinal axes (x, x1, z) of the associated lever arm (3, 30) of the two-armed oscillating lever (1) and the connecting rod (4).

3. A device as claimed in claim 1, characterized in that a bearing pin (9) extending in the direction of the longitudinal axis (x) of the two-armed oscillating lever (1) is provided on the lever arm (3, 30) cooperating with the connecting rod (4), that the rigid connecting rod (4) has at its one end a bearing bore (11) of relatively thin wall thickness surrounding the bearing pin (9, 9.2) with a predetermined clearance therebetween, that the bearing pin (9) is provided with a stop means (10) against which the connecting rod (4) abuts, and that both the stop means (10) and the area around the bearing bore (11) are formed such as to ensure an unhindered rolling action in the contact area in all directions of motion of connecting rod (4) and two-armed oscillating lever (1).

4. A device as claimed in claim 3, characterized in that the stop means (10) on the bearing pin (9) is of rounded configuration.

5. A device as claimed in claim 3 and claim 4, characterized in that the connecting rod (4) is of rounded configuration in the area of the bearing bore (11), said rounding being conformed to the rounded contours of the stop means (10).

6. A device as claimed in claim 1 or claim 2, characterized in that the connecting rod (4) is pivotally mounted on the associated lever arm (3, 30) of the twoarmed oscillating lever (1) about the longitudinal axis (x) thereof, and that the connecting rod (4) includes a pair of joints/film hinges (22, 23) whose center/bending axis (BM) intersects the longitudinal axis (x) of the associated lever arm (3, 30) of the two-armed oscillating lever (1).

7. A device as claimed in any one of the claims 1, 2 or 5, characterized in that the connecting rod (4) has a fork-shaped end, that the prongs (17, 18) of the connecting rod (4) are interconnected by a cross piece (20), that said cross piece (20) is provided with an arm (21) which extends into the opening between the prongs and includes a bearing bore (11), and that the prongs (17, 18) of the fork are each provided with a film hinge whose common center/bending axis (BM) intersects the center axis of the bearing bore (11).

8. A device as claimed in claim 6, characterized in that a bearing pin (9) extending in the direction of the longitudinal axis (x) of the two-armed oscillating lever (1) is provided on the lever arm (3, 30) cooperating with the connecting rod (4).

9. A device as claimed in any one of the claims 6 to 8, characterized in that the connecting rod (4) has its one end coupled with the two-armed oscillating lever (1) through the bearing bore (11) in a manner allowing it to pivot about the bearing pin (9) of the associated lever arm (3, 30), while its other end is coupled with the eccentric (16) through a head (6) formed at the end of the shank (19) of the connecting rod (4).

10. A device as claimed in any one of the claims 6 to 9, characterized in that a bearing pin (9) having a peripheral groove (26) is provided on the arm (3, 30) of the two-armed oscillating lever (1) cooperating with the connecting rod (4), said groove being accessible through two opposed grooves (27) extending in the direction of the bearing pin portion (9.1).

11. A device as claimed in claim 7, characterized in that hook-shaped fastening means (24, 25) are formed on the arm (21).

12. A device as claimed in one or several of the preceding claims, characterized in that the longitudinal axis (x, x1) of the lever arm (3, 30) of the two-armed oscillating lever (1) cooperating with the connecting rod (4) extends in the direction of the longitudinal axis (x) of the lever arm (2) provided with a pin (8) or, alternatively, extends at an angle to said longitudinal axis (x).

13. A device as claimed in one or several of the preceding claims, characterized in that the longitudinal axis (z) of the connecting rod (4) intersects the longitudinal axis (x, x1) of the associated lever arm (3, 30) of the two-armed oscillating lever (1) at right angles.

**Revendications**

1. Dispositif destiné à transformer le mouvement rotatif d'un excentrique (16) entraîné par un arbre moteur en un mouvement de va-et-vient d'un outil de travail, ce dernier étant accouplé à un maneton (8) et appartenant à un petit appareil actionné électriquement, dans le boîtier duquel est monté sur pivot un balancier (1) à deux bras muni du maneton (8), une bielle (4) étant prévue afin de relier le balancier à deux bras à l'excentrique, la bielle (4) étant accouplée à l'excentrique (16) au moyen d'un coussinet rotatif (14, 16), caractérisé en ce que le balancier (1) à deux bras et la bielle (4) sont couplés ensemble par une liaison articulée qui permet, par rapport au balancier (1), aussi bien des rotations de la bielle (4) qu'une translation dudit balancier parallèlement à l'axe longitudinal (X), et en ce que le centre d'articulation (7) est situé sur l'axe longitudinal (X) du bras de levier (3, 30) associé appartenant au balancier (1) à deux bras.

2. Dispositif suivant la revendication 1, caractérisé en ce que le centre d'articulation (7) coïncide avec le point d'intersection des axes longitudinaux (X, X1, Z) du bras associé (3, 30) du balancier (1) et de la bielle (4).

3. Dispositif suivant la revendication 1, caractérisé en ce qu'au bras de levier (3, 30) du balancier (1) à deux bras, associé à la bielle (4), on a prévu une tige d'appui (9) s'étendant suivant l'axe longitudinal (X) du balancier, la bielle (4) de forme rigide présentant a une de ses extrémités, dans une paroi relativement mince, un alésage d'appui (11) qui entoure la tige d'appui (9, 9.2) avec un jeu de mouvement prédéterminé, la tige d'appui (9) étant pourvue d'un chanfrein (10) auquel est ajusté le bras de bielle (4), et le chanfrein (10) aussi bien que la zone entourant l'alésage d'appui (11) étant formés de telle manière qu'un déroulement sans contrainte soit garanti dans la zone de contact et cela dans toutes les directions de mouvement de la bielle (4) et du balancier (1) à deux bras.

4. Dispositif suivant la revendication 3, caractérisé en ce que le chanfrein (10) de la tige d'appui (9) présente une forme arrondie.

5. Dispositif suivant l'une des revendications 3 et 4, caractérisé en ce que la bielle (4) présente, dans la région de l'alésage d'appui (11), une forme arrondie adaptée au chanfrein (10).

6. Dispositif suivant l'une des revendications 1 ou 2, caractérisé en ce que la bielle (4) est montée à rotation sur le balancier (1) à deux bras, autour de l'axe longitudinal (X) du bras de levier (3, 30) du balancier qui lui est associé, la bielle (4) présentant une paire d'articulations sous forme d'un couple de charnières (22, 23) constituées d'un film et dont l'axe central de flexion (BM) coupe l'axe longitudinal (X) du bras de levier (3, 30) associé appartenant au balancier (1) à deux bras.

7. Dispositif suivant l'une quelconque des revendications 1, 2 ou 5, caractérisé en ce que la bielle (4) présente une extrémité en forme de fourche, une entretoise (20) reliant entre eux les membres (17, 18) de la fourche, un bras (21) muni d'un alésage d'appui (11) étant agencé à ladite entretoise et s'étendant dans l'ouverture de la fourche, et lesdits membres (17, 18) étant pourvus respectivement d'une charnière constituée d'un film dont l'axe central de flexion (BM) coupe l'axe central de l'alésage d'appui (11).

8. Dispositif suivant la revendication 6, caractérisé en ce qu'au bras de levier (3, 30) du balancier (1) à deux bras, associé à la bielle (4), on a placé une tige d'appui (9) s'étendant suivant l'axe longitudinal (X) du balancier.

9. Dispositif suivant l'une quelconque des revendications 6 à 8, caractérisé en ce que la bielle (4) est accouplée, d'une part, par l'alésage d'appui (11) avec la tige d'appui (9) du bras de levier (3, 30) associé appartenant au balancier (1) à deux bras, de manière à pouvoir osciller autour de cette tige et, d'autre part, avec l'excentrique (16), par une tête de bielle (6) agencée à l'extrémité du corps de fourche (19) de la bielle (4).

10. Dispositif suivant l'une quelconque des revendications 6 à 9, caractérisé en ce que le bras de levier (3, 30) du balancier (1) à deux bras associé à la bielle (4), possède une tige d'appui (9) avec une gorge circulaire (26) en communication avec deux rainures (27) situées de part et d'autre de la tige d'appui (9.1) et alignées suivant la direction de ladite tige.

11. Dispositif suivant la revendication 7, caractérisé en ce que des moyens de fixation (24, 25) en forme de griffes sont façonnés sur le bras (21).

12. Dispositif suivant une ou plusieurs des revendications précédentes, caractérisé en ce que l'axe longitudinal (X, X1) du bras de levier (3, 30) du balancier (1) à deux bras associé à la bielle (4), est situé dans l'alignement de l'axe longitudinal (X) du bras de levier (2) pourvu d'un maneton (8) ou bien forme un angle avec cet axe longitudinal (X).

13. Dispositif suivant une ou plusieurs des revendications précédentes, caractérisé en ce que l'axe longitudinal (2) de la bielle (4) coupe l'axe longitudinal (X, X1) du bras de levier (3, 30) du balancier (1) à deux bras qui lui est associé suivant un angle droit.

# FIG.1

# FIG.2

# FIG.3

FIG.4

# FIG.5

# FIG.6